# EUROPÄISCHE PATENTSCHRIFT

(11) **EP 1 479 587 B1**
(45) Veröffentlichungstag und Bekanntmachung des Hinweises auf die Patenterteilung: **17.10.2007**
(21) Anmeldenummer: 04450066.8
(22) Anmeldetag: 16.03.2004
(51) Int. Cl.: B61L 1/16, B61L 1/08

(54) **Schaltungsanordnung zum Abgleichen von induktiven Sensoren**
Circuit arrangement for adjusting inductive sensors
Circuit pour ajuster des capteurs inductifs

(30) Priorität: 27.03.2003 AT 4872003
(43) Veröffentlichungstag der Anmeldung: 24.11.2004
(73) Patentinhaber: Frauscher, Josef, Ing., 4774 St. Marienkirchen (AT)
(72) Erfinder: Frauscher, Josef, Ing., 4774 St. Marienkirchen (AT)
(74) Vertreter: Hübscher, Helmut

(56) Entgegenhaltungen:
- EP-A- 0 668 203
- DE-A1- 4 132 393
- DE-A1- 19 959 233
- US-B1- 6 371 417

## Beschreibung

Die Erfindung bezieht sich auf eine Schaltungsanordnung zum Abgleichen von induktiven Sensoren, insbesondere von im Gleisbereich von Bahnen vorgesehenen Zweidraht-Radsensoren, die in der Befestigungslage an der Schiene unterschiedlichen Beeinflussungen zum Beispiel auf Grund der Schienenform, der Montagestellung bzw. der momentanen Temperatur unterliegen, welche Schaltungsanordnung passive Abgleichelemente und eine wenigstens einen über einen Steuerbefehl aktivierbare Steuereinrichtung aufweist, die die Abgleichelemente bis zum Erreichen eines Sollzustandes an- bzw. abschaltet,

Einrichtungen zum Erfassen von Eisenbahnrädern werden zunehmend mit Hilfe von induktiven Sensoren realisiert. Meist sind zwei unabhängige Einzelsensoren in einem gemeinsamen Gehäuse in Schienenlängsrichtung hintereinander angeordnet. Ihre Aufgabe ist es, mit hoher Verfügbarkeit Signale zur Verfügung zu stellen, die meist über eine Kabelstrecke in eine Innenanlage geleitet und dort entsprechend bewertet werden. Damit können signaltechnische Funktionen wie beispielsweise die Anwesenheitsmeldung eines Schienenfahrzeuges, die Fahrtrichtungserkennung oder eine Gleisfreimeldung in Form einer Achsenzählung errichtet werden. Die DE19915597A1 und die DE 3234651 A1 befassen sich beispielsweise mit derartigen Radsensoren.

Das Wirkprinzip besteht darin, daß jedes Sensorsystem aus einer Sensorspule mit oder ohne Eisenkern, und einer Oszillatorschaltung besteht. Die Sensorspule bildet mit einem Kondensator einen Schwingkreis, der ein Wechselmagnetfeld in seiner Umgebung aufbaut. Sobald ein Spurkranz eines Rades in den Wirkbereich der Sensorspule eindringt, wird der Schwingkreis bedämpft, weil ihm das Eisen des Spurkranzes Energie durch Wirbelstromverluste entzieht. In der Folge ändert sich die Spannungsamplitude oder Frequenz des Schwingkreises, was in den meisten Sensorschaltungen in eine Änderung der Stromaufnahme des Sensorsystems umgewandelt wird. Dieses Stromsignal wird vorzugsweise in einer Zweidrahtleitung in die Innenanlage einer Sicherungsanlage geleitet und dort beispielsweise mit Hilfe von Komparatorschaltungen zu Schaltsignalen umgewandelt und dann der weiteren Verarbeitung für unterschiedliche Aufgaben im Rahmen der Sicherungsanlage zugeführt.

Die DIN19234 beschreibt eine solche Stromschnittstelle von Sensoren, wie sie auch in der Praxis der Radsensortechnik angewandt werden. Dort ist ein Ruhestrompegel von etwa 3 mA festgelegt, der bei Bedämpfung des Sensors, im Normblatt als elektrischer Wegaufnehmer bezeichnet, auf ca. 1 mA absinkt. Stand der Technik sind jedoch auch andere Strompegel, beispielsweise 5, 8, oder 20 mA im Ruhezustand.

Die Montageposition des Radsensors wird durch die Geometrie Schiene - Rad in engen Grenzen vorbestimmt. Durchgesetzt hat sich die Erfassung des Spurkranzes der Räder, weil dadurch der Radsensor auf ca. 40-50 mm unter Schienenoberkante an einer sehr geschützten Stelle im Gleisbereich angeordnet werden kann. Dort ist ein weitgehender Schutz vor Beschädigung beispielsweise durch Schneepflüge, Zweiwegfahrzeuge oder durch sonstige Teile, die an den Schienenfahrzeugen hängen können, gegeben.

In dieser Montageposition ist es unvermeidbar, daß sich mindestens der Schienenkopf teilweise im Wirkbereich des Sensormagnetfeldes befindet. Der Zwang besteht darin, daß der Sensor nicht ohne weiteres vom Schienenkopf weg ein Stück in Richtung Gleismitte verschoben werden kann, weil dann eng am Schienenkopf anlaufende Spurkränze nicht mehr zuverlässig detektiert werden können. Es für eine zuverlässige Funktion des Sensors entscheidend, daß sich der Wirkbereich besonders entlang der seitlichen, vertikalen Fläche des Schienenkopfes ausbildet, weil dann nicht nur eng anlaufende und schmale, stark verschlissene Spurkränze erfaßt werden, sondern in Sonderfällen auch am Schienenkopf hoch laufende Räder.

In der vorbestimmten Montageposition wirkt das Eisen des Schienenkopfes bedämpfend auf den Radsensor ein. Dieser Einfluß muß in der Sensorschaltung berücksichtigt werden beispielsweise in Form eines Vorabgleichs der Empfindlichkeit des Sensorsystems. Dadurch wird das Sensorsystem erst dann ausreichend empfindlich und tauglich für seine Aufgabe, wenn es sich in Bezug auf die Schiene an der richtigen Position befindet und der Schienenkopf als teilbedämpfendes Element einwirkt.

Wegen der unterschiedlichsten Größen und Formen der in der Praxis vorkommenden Schienenprofile, ihrer Walztoleranzen, des Schienenkopfverschleißes und der Toleranzen der Radsensorbefestigungselemente wäre es rein zufällig, daß ein Radsensor nach seiner Montage an der Schiene auch gleich die korrekte Vorbedämpfung des Sensorsystems erfährt. Man bedient sich daher eines Feinabgleichs, wie es beispielsweise die DE29724467U1 beschreibt. Dort stellt man mit Hilfe von Potentiometern die Empfindlichkeit des Sensorsystems nach. Weitere bekannte Verfahren sind das Verstellen von Kernen in der Sensorspule oder das Justieren der Position des Sensors in Bezug zum Schienenkopf mit Hilfe von speziellen Einrichtungen an seiner Befestigungsvorrichtung. Ein solches Verfahren behandelt die DE3234651A1.

Der Nachteil solcher Justierungen besteht darin, daß die Arbeiten des Personals im Gleisbereich deutlich länger dauern, als wenn sich die Aufgaben nur auf die reine Montage beschränken würden. Die Folgen können zusätzliche Verspätungsminuten des Bahnverkehrs und eine Erhöhung des Gefahrenpotentials für das Personal im Gleisbereich sein. Auch birgt jede Form der beschriebenen Justageeinrichtungen die Gefahr, daß sie sich infolge der beträchtlichen mechanischen, chemischen und elektromagnetischen Belastungen, denen Radsensoren am Gleis ausgesetzt sind, im Laufe der Zeit verändern oder verstellen und solcherart die Verfügbarkeit der Sensoren negativ beeinflussen. Nicht zuletzt können widrige Witterungsverhältnisse zu unangenehme Arbeitsbedingungen am Gleis führen und das Fehlerpotential, das grundsätzlich bei manuellem Abgleich gegeben ist, erhöhen.

Ein weiterer prinzipieller Nachteil der üblichen Abgleicheinrichtungen und -verfahren ergibt sich daraus, daß die Bauteile der induktiven Sensoren auch dem Einfluß der momentanen Betriebs- bzw. Außentemperatur unterliegen. Der Widerstand des Spulendrahtes der Sensorspule erhöht sich mit zunehmender Temperatur, so daß ohne Kompensation die Spulengüte abnimmt. Auch das dielektrische Verhalten einer Kunststoffvergußmasse, in die Sensorspule gewöhnlich eingebettet wird, verändert sich und beeinflußt die Spulengüte die für ein stabiles Arbeitsverhalten des Sensors von besonderer Bedeutung ist. Ähnliche Nachteile bzw. Fehler oder Störungen ergeben sich durch temperaturbedingtes Driften von Schwingkreiskondensatoren oder Spulenferriten, wobei sich die Kreisfrequenz ändert und damit das Sensorsignal nachteilig beeinflußt wird.

Eine Schaltungsanordnung der eingangs genannten Art ist Gegenstand der DE 41 32 393 A1. Bei dieser Ausführung wird die Sensorspule nicht beeinflußt und liefert daher ein nicht vorbestimmbares Signal je nach dem Grad der Vorbedämpfung, der Montagestellung, der Umgebungstemperatur usw. Dieses Signal wird trotzdem als gegeben angenommen, wobei über einen Binärzähler aus einer Widerstandskaskade ein Vergleichspegel generiert wird, der über einen Komparator mit dem Sensorsignal verglichen wird und damit den Meßsignalpegel bestimmt. Dieser an sich undefinierbare Pegel geht bei einem Spannungsabfall verloren. Da das abgegebene Signal der Schaltungsanlage nicht eindeutig definiert ist, ist der Einsatz in hochverfügbaren Achszähleranlagen bedenklich. Auch eine Schaltungsanordnung nach der DE 41 32 393 A1 arbeitet mit einem Komparator, der bei Änderung eines Ruhepegels einen Schaltimpuls auslöst. Die Konstruktion nach der EP 0 668 203 A1 arbeitet nach einem ähnlichen Prinzip, wobei der Sensor überdies aus Sender und Empfänger besteht und sich damit schon grundlegend von einer Einrichtung der eingangs genannten Art unterscheidet. Auch die Schaltung nach der DE 199 59 233 A1 orientiert sich nach vorhandenen Sensorsignalpegeln.

Aufgabe der Erfindung ist die Schaffung einer Schaltungsanordnung der eingangs genannten Art, durch die die aufgezeigten Nachteile beseitigt werden und ein einwandfreier schneller, haltbarer und beliebig wiederholbarer Abgleich der Sensoren ermöglicht wird. Eine Teilaufgabe der Erfindung besteht darin, auch die durch Temperaturänderungen gegenüber dem Abgleichzeitpunkt bedingten Nachteile zu beseitigen.

Die gestellte Aufgabe wird prinzipiell dadurch gelöst, daß die Steuereinrichtung wenigstens einen über den Steuerbefehl aktivierbaren Mikrocontroller und von diesem gesteuerte Schalter aufweist, welche die insbesondere aus Widerständen und/oder Kondensatoren bestehenden Abgleichelemente in vorwählbarer Reihenfolge direkt an die Oszillatorspule des Sensors an bzw. von dieser abschaltet, bis der zum Beispiel durch eine vorgegebene Höhe für den Soll-Ruhestrom des Sensors definierte Abgleich erreicht ist, wobei, zum Beispiel im Mikrocontroller, ein nicht flüchtiger Speicher vorgesehen ist, der die Schalterstellungen im Abgleichzustand bei nach dem Abgleichen deaktiviertem Mikrocontroller festhält.

Bevorzugt wird eine Ausführung bei der der Mikrocontroller einen Eingang für ein z. B. vom Ruhestrom des Sensors abgeleitetes, dem momentanen Abgleichzustand entsprechendes Meßsignal aufweist und aus dem Vergleich dieses Meß-signales mit einem gespeicherten Referenzwert für den Sollzustand die neuen Abgleichbefehle entwickelt.

Die Information, also ein entsprechender Steuerbefehl, kann über die Kabelstrecke zugeführt werden, wonach der programmgemäße Abgleich erfolgt.

Die Werte der passiven Bauelemente sind vorzugsweise in einer binären Reihenfolge gestuft um den Abgleichbereich in feinen Stufen bei minimaler Anzahl der Bauelemente abdecken zu können. Der Mikrocontroller vergleicht programmgemäß den von der Schaltung aufgenommenen Strom oder die Schwingfrequenz oder beides mit internen Referenzwerten und stoppt schließlich den Abgleichvorgang, sobald das Ergebnis mit der Referenz am besten übereinstimmt. Da der Zustand der Ausgänge erfindungsgemäß in einem nicht flüchtigen Speicher abgelegt wird, kann bei Spannungsausfall der Abgleichzustand nicht verloren gehen.

Diese Erfindung geht von der Tatsache aus, daß die Eigenschaften einer Spule durch das Zu- und Wegschalten von bestimmten passiven Bauteilen zwischen Spulenausgängen verändert werden kann. Beispielsweise wird die Spulengüte verringert, wenn ein ohmscher Widerstand aufgeschaltet wird. Die Eigenfrequenz der Spule wird verringert, wenn eine Kapazität aufgeschaltet wird.

Diese Prozesse sind eine Nachbildung dessen, was bisher verschiedene manuelle Abgleichverfahren tatsächlich bewirkt haben. Zum Beispiel bewirkt eine abgleichbedingte Annäherung der Sensorspule an den Schienenkopf eine Minderung der Spulengüte wegen des Einflusses der Wirbelstromverluste an der Eisenoberfläche des Schienenkopfes.

Ein bedeutender Vorteil der erfindungsgemäßen Einrichtung ist es, den Abgleich des Sensorsystems nach erfolgter Montage am Gleis zumindest nicht im Gefahrenbereich, also in ausreichender Entfernung vom Gleisbereich, vorzugsweise in der Innanlage der Signalanlage, beispielsweise im Bereich der Signalbewertungseinrichtungen, durchführen zu können. Nach einer bevorzugten Ausgestaltung der Erfindung ist der Mikrocontroller an die Leitungen des Radsensors angeschlossen, durch ein über diese Leitung übertragenes, sich von der Versorgungsspannung des Sensors unterscheidendes Signal aktivierbar und zeigt den erfolgten Abgleich durch ein Quittierungssignal an.

Die Quittiermeldung kann über die Kabelstrecke zurück an jene Stelle gesendet werden, von der aus der Abgleichbefehl abgesandt wurde. Diese zusätzliche Möglichkeit schließt etwaige Bedienungsfehler gänzlich aus und erhöht die Verfügbarkeit der Anlage.

Wie schon erwähnt wurde, wird der Befehl zur Durchführung des Abgleichs über das Sensoranschlußkabel der Sensorschaltung zugeführt. Eine Möglichkeit besteht darin, daß ein Spannungsimpuls auf die Adern aufgeschaltet wird, dessen Wert deutlich höher ist, als jener der Versorgungsspannung. Dieser Impuls wird in der Sensoreingangsbeschaltung aufbereitet und dem Mikrocontroller als Eingangsbefehl zugeführt. Dabei sollte der Impuls deutlich länger sein als z.B. die typische Länge eines Störimpulses. Die Auswertung des Sendeimpulses im Mikrocontroller kann programmgemäß derart erfolgen, daß Störimpulse ohne weiteres von Nutzimpulsen unterschieden werden können.

Nach einer anderen Möglichkeit wird zur Aktivierung ein eine definierte Frequenz aufweisender Impuls verwendet.

Optional bietet die Erfindung in einer weiteren Ausgestaltung die Möglichkeit an, die Befehlsübertragung mittels vom Eingang des Mikrocontrollers erfaßbarer serieller Datenworte durchzuführen. Diese Technik erlaubt die Übertragung verschiedener Befehle. Dadurch öffnen sich weitere Vorteile der Erfindung, beispielsweise der Abgleich des Sensors auf einen bestimmten Wert, der über eine serielle Schnittstelle vorgegeben wird.

Um den Abgleich einleiten zu können, ist ein Abgleichgerät erforderlich. Dieses kann in einer einfachsten Form eine Spannungsquelle sein, die an einer Stelle des Kabelweges, beispielsweise an einer Klemmstelle, den Adern der Radsensorleitung aufgeschaltet wird. In einer bevorzugten Ausführung sind im Abgleichsender ein Zeitglied für die Länge des Sendeimpulses und eine Empfangsschaltung für die Darstellung eines Quittiersignals integriert.

Ein Abgleichgerät mit Einrichtungen zum Senden und Empfangen von seriellen Daten wird auf die Adern der Radsensorleitung aufgeschaltet. Optional ist das Abgleichgerät bereits in die Sensorbewertungsbaugruppe integriert. Diese Ausführungsform ist besonders komfortabel, weil das Handling mit einem separaten Gerät entfällt. Entscheidend ist, daß der Befehl zum Auslösen des Abgleichs vorzugsweise manuell ausgelöst wird, wie zum Beispiel durch einen an der Baugruppe befindlichen Taster. Eine Automatisierung des Abgleichs, beispielsweise in gewissen Zeitabständen oder jedes Mal nach Einschalten der Versorgungsspannung, ist nicht zweckmäßig, weil in diesem Augenblick unter Umständen die Sensoren ganz oder teilweise von Fahrzeugrädern bedämpft sein können und in diesem Zustand ein Abgleich nicht oder nur fehlerhaft vollzogen werden kann.

Die vorstehend erwähnte Teilaufgabe der Erfindung wird prinzipiell dadurch gelöst, daß wenigstens ein mit einem Eingang des Mikrocontrollers verbundener Temperatursensor vorgesehen ist, so daß der Mikrocontroller bei Änderungen der Temperatur gegenüber der Temperatur bei einem Erstabgleich die Schalterstellungen bzw. die die Schalterstellungen bewirkenden Speicherwerte nach einem gespeicherten Korrekturprogramm im Sinne einer Temperaturkompensation unter Aufrechterhaltung des Erstabgleichzustandes verändert. Bei dieser Ausführungsvariante ist eine Änderung der Speicherwerte aufgrund der Momentantemperatur jederzeit möglich. Die eingangs beschriebene Gesamtanordnung wird nur durch den oder die Temperaturfühler ergänzt, wobei der Mikrocontroller selbstverständlich ein entsprechendes zusätzliches Programm für die Temperaturkompensation erhält. Bei dieser Ausführungsvariante kann es auch sinnvoll sein, den Erstabgleich nach anderen als den oben erwähnten erfindungsgemäßen Verfahren vorzunehmen und die Automatik auf den Temperaturausgleich zu beschränken.

Eine Vereinfachung der Gesamtanordnung und ihre Anwendbarkeit für weitere Aufgaben läßt sich in Weiterbildung bzw. Abänderung der Erfindung dadurch erzielen, daß für die Frequenzabstimmung die gesteuerten Schalter und von ihnen ein- und abschaltbare Kondensatoren herkömmlicher Bauart durch wenigstens eine Kapazitätsdiode ersetzt oder ergänzt sind, wobei der Mikrocontroller die Höhe der Sperrspannung der Kapazitätsdiode nach den Speicherwerten bestimmt. Diese einfache Schaltung nützt die Spannungsabhängigkeit der Sperrschichtkapazität aus. Damit läßt sich mit besonders geringem Aufwand der Abgleich über die Kapazität erzielen. Im Bedarfsfall können auch zwei oder mehrere Kapazitätsdioden eingesetzt werden, wobei nach einer Ausführungsform zwei Kapazitätsdioden in Gegenschaltung angeordnet werden, denen die Sperrspannung über eine Mittelanzapfung zugeführt wird. Für den Abgleich wird die Sperrspannung entsprechend eingestellt und der Einstellungswert abgespeichert. Auch hier ist eine Temperaturkompensation im Sinne der Darlegungen im vorstehenden Absatz möglich und es ist auch denkbar, zusätzlich zur Frequenzabstimmung die beschriebene Abstimmung über schaltbare Widerstände vorzunehmen.

Weitere Einzelheiten und Vorteile des Erfindungsgegenstandes entnimmt man der nachfolgenden Zeichnungsbeschreibung. In der Zeichnung ist der Erfindungsgegenstand beispielsweise dargestellt. Es zeigen:
- Fig. 1: in vereinfachter Form einen Schnitt durch eine Eisenbahnschiene mit einem am Schienensteg montierten Radsensor und einem Ausschnitt eines Eisenbahnrades.
- Fig. 2: schematisch ein Beispiel einer durch die erfindungsgemäße Schaltungsanordnung ergänzten Radsensorschaltung,
- Fig. 3: schematisch das Gesamtsystem Radsensor- Kabelstrecke-Signalbewertung und den Eingriff eines Abgleichgerätes,
- Fig. 4 und 5: Diagramme der möglichen Sende- und Empfangssignale beim Abgleichen und
- Fig. 6: eine Variante zur Ausführungsform nach Fig. 2 bei der eine Kapazitätsdiode als Abgleichelement Verwendung findet.

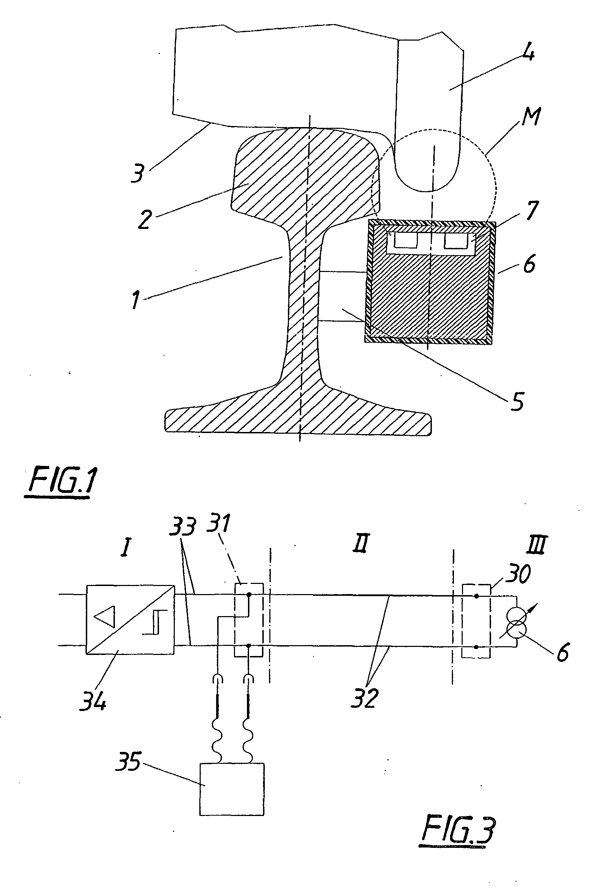

Fig. 1 zeigt den Schnitt durch eine Eisenbahnschiene 1 und einen Ausschnitt eines auf der Lauffläche des Schienenkopfes 2 befindlichen Rades 3 mit dem Spurkranz 4. Am Schienensteg der Schiene 1 ist mittels einer Befestigungsvorrichtung 5 der im Schnitt dargestellte Radsensor 6 befestigt. Nahe an der Oberfläche des Radsensors 6 befindet sich die Sensorspule 7, deren Magnetfeld M sich nach oben ausbreitet. In den Wirkbereich des Magnetfeldes M gelangt neben dem Spurkranz 4 auch der Schienenkopf 2 der Schiene 1. Beide Elemente wirken auf die Sensorspule 7 bedämpfend ein. Wenn sich kein Rad 3 mit Spurkranz 4 im Wirkbereich der Sensorspule 7 befindet, bleibt der Schienenkopf 2 als ein teilbedämpfendes Element vorhanden. Unterschiedliche Formen der Schienenprofile, Toleranzen im Walzprofil und Toleranzen in der Befestigungsvorrichtung führen zu erheblichen Unterschieden im Grad der Vorbedämpfung des Sensorsystems, die nach erfolgter Montage ausgeglichen werden müssen.

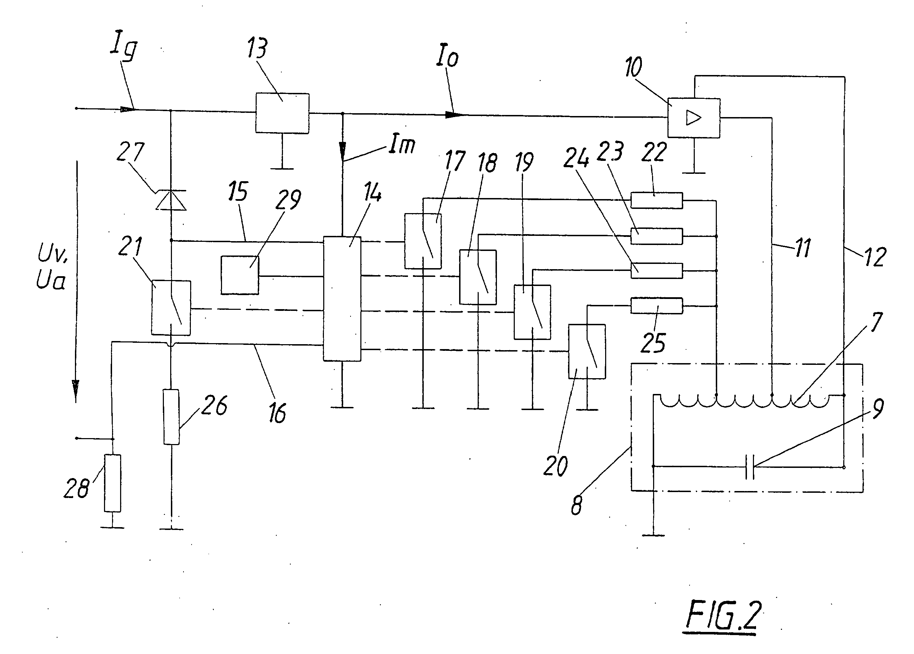

Kern der Schaltung nach Fig. 2 ist der Schwingkreis 8, im einfachsten Fall bestehend aus einer Sensorspule 7 und einem Kondensator 9. Ein Verstärker 10 mit einer Treiberleitung 11 und einer Rückkopplungsleitung 12 zum Schwingkreis 8 bildet den Oszillator. Je nach Bedämpfung des Schwingkreises 8 ändert sich die Stromaufnahme lo des Oszillators. Diese Änderung der Stromaufnahme lo wird gemäß dem Stand der Technik zur Anwesenheitsmeldung eines Fahrzeugrades ausgewertet.

Die Radsensorschaltung ist zur Verwirklichung der Erfindung mit weiteren Einrichtungen ergänzt. Zunächst sorgt ein Regelbaustein 13, der vorzugsweise als Spannungsregler ausgebildet ist, dafür, daß ein Mikrocontroller 14 und der Verstärker 10 auch dann mit konstanter Spannung versorgt werden, wenn sich die Eingangsspannung Uv/Ua stark ändert.

Der Mikrocontroller 14 besitzt mindestens zwei Eingänge 15, 16, und mehrere Ausgänge, die auf die Abgleichschalter 17 bis 20 und den Quittierungsschalter 21 wirken. Diese Schalter 17 bis 21 können vorzugsweise Transistoren sein, die mit geringer Leistung steuerbar sind. Die Abgleichschalter 17 bis 20 sind derart verschalten, daß sie in Abhängigkeit von der Ansteuerung durch die Ausgänge des Mikrocontrollers 17in der Lage sind, passive Bauelemente 22 bis 25 zwischen Spulenanschlüsse oder in induktiv gekoppelte Spulenwindungen einzuschalten oder abzuschalten. Die passiven Bauelemente 22 bis 25 sind beim Ausführungsbeispiel als Widerstände gezeichnet. Sobald ein solches Bauteil in die Spulenanschlüsse geschaltet wird, sinkt die Güte der Spule auf etwa die gleiche Weise, wie wenn der Schienenkopf weiter in das Magnetfeld der Sensorspule eindringen würde. In einer weiteren Ausgestaltung der Erfindung ist vorgesehen, daß die passiven Bauteile 22 bis 25 Kondensatoren sind. Durch Zuschaltung oder Abschaltung ändert sich die Resonanzfrequenz der Spule 7. In manchen Sensorschaltungen kann auch diese Methode als Abgleich angewandt werden.

Der Quittierungsschalter 21 ist in der Lage, in Abhängigkeit von der Ansteuerung durch den Mikrocontroller 14 den Sensorversorgungsstrom Ig zu beeinflussen, in dem ein Widerstand 26 in Serie zu einer Z-Diode 27 zwischen die Versorgungsanschlüsse der Sensorschaltung aufgeschaltet wird. Diese Wirkung kann nur dann eintreten, wenn die Versorgungsspannung größer ist als die Spannung der Z-Diode 27.

Zunächst sei der normale Betriebszustand des Radsensors 6 betrachtet. Die Schaltung wird mit der Versorgungsspannung Uv versorgt. Die Spannung Uv muß mit Rücksicht auf die Regelfunktion des Spannungsreglers 13 größer sein als dessen Ausgangsspannung und etwa gleich groß wie der Spannungswert der Z-Diode 27. Es fließt der Sensorgesamtstrom Ig, der sich im wesentlichen aus dem konstanten Versorgungsstrom Im des Mikrocontrollers 14 und aus dem variablen Oszillatorstrom lo zusammensetzt. Da die gesamte Versorgungsspannung Ua an der Z-Diode 27 abfällt, ist das Eingangssignal über 15 in den Mikrocontroller 14 Null.

Der Abgleichvorgang wird eingeleitet, indem die Versorgungsspannung Uv auf den Wert Ua durch die äußere Aufschaltung eines Abgleichgerätes angehoben wird. Um Störbeeinflussungen zu vermeiden ist es vorteilhaft, wenn die Abgleichspannung Ua deutlich höher ist, als die Versorgungsspannung Uv, beispielsweise doppelt so hoch. Bei diesem Vorgang wird der Eingang 15 des Mikrocontrollers 14 aktiviert, worauf ein Programm mit etwa folgendem Ablauf gestartet wird:

Zunächst werden alle Schalter 17 bis 20 geöffnet, dabei steigt die Güte der Spule 7 und einhergehend die Stromaufnahme des Oszillators, damit einhergehend die Stromaufnahme Ig der gesamten Sensorschaltung. Über einen Meßwiderstand 28 wird die Gesamtstromaufnahme Ig der Sensorschaltung als Spannungswert abgebildet und in einen Analogeingang 16 des Mikrocontrollers 14 eingelesen und dort mit einem fest gespeicherten Wert verglichen. In der weiteren Folge schaltet der Mikrocontroller 14 stufenweise die Widerstände 22 bis 25 , die in binärer Wertigkeit gestuft sind, solange auf, bis die Gesamtstromaufnahme Ig am besten mit dem fest gespeicherten Vergleichswert übereinstimmt. Im Beispiel der Fig. 2 sind vier passive Bauelemente 22 bis 25 angedeutet, die bei binärer Wertstufung insgesamt sechzehn Abgleichstufen zulassen. Für den erfindungsgemäßen Gedanken ist es unbedeutend, ob mehr oder weniger Stufen installiert sind. Das Ergebnis des Abgleichs wird im Mikrocontroller 14 in einem nicht flüchtigen Speicher abgelegt. Es steht also auch nach einem Ausfall der Versorgungsspannung zur Verfügung.

Im Falle eines Frequenzabgleichs mittels Kondensatoren als passive Bauelemente ist der Abgleichvorgang identisch mit jenem des Güteabgleichs mittels Widerständen 22 bis 25.

In Fig. 2 ist noch ein Temperatursensor 29 angedeutet, der mit einem Eingang des Mikrocontrollers 14 verbunden ist. Bei der bisher beschriebenen Ausführungsform wird im Mikrocontroller 14 ein der Temperatur zum Abgleichzeitpunkt entsprechender Wert gespeichert. Der Mikrocontroller 14 ändert dann bei Änderungen der Momentantemperatur gegenüber dem gespeicherten Temperaturwert die Speicherwerte für die Schalterstellungen oder beaufschlagt diese Speicheniverte während der Messung mit entsprechenden Korrekturwerten, so daß der bisher mögliche Temperaturfehler vermieden wird. Es kann auch vorteilhaft sein, die Schaltungsanordnung mit den Schaltern 17 bis 20 und den Abgleichelementen 22 bis 25 lediglich zur Temperaturkompensation bei in anderer Weise abgeglichenen induktiven Sensoren 8 zu verwenden. In der weiteren Beschreibung wird aber wieder vorwiegend auf den automatischen Gesamtabgleich Bezug genommen.

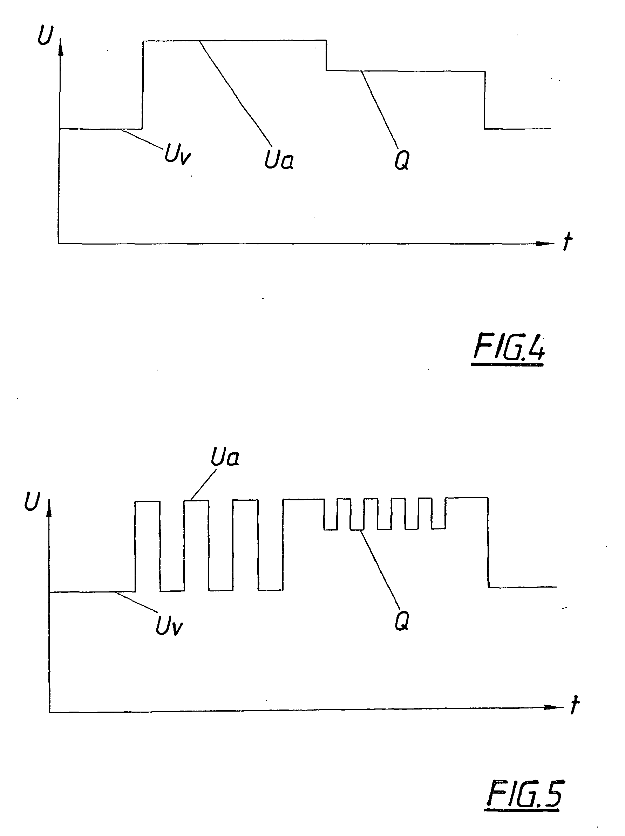

In Fig. 3 bedeuten: I den Anlagenteil Innenanlage, II die Kabelstrecke, die meist in Form eines Erdkabels ausgebildet ist und III die Gleisanlage. In der Gleisanlage III befindet sich gewöhnlich ein Klemmkasten oder Gleisanschlußgehäuse 30, in dem das Radsensorkabel mit dem Erdkabel verbunden ist. Der Radsensor 6 ist hier als veränderliche eingeprägte Stromquelle dargestellt.

Die Innenanlage I beherbergt in den meisten Fällen eine Kabelabschlußeinrichtung 31, die das Erdkabel 32 und das Innenraumkabel 33 auf Kabelklemmen führt. Das Innenraumkabel 33 ist zu einer Bewertungs- und Verstärkerbaugruppe 34 geführt, welche sowohl die Spannungsversorgung für den Radsensor 6 bereitstellt als auch die vom Radsensor 6 generierten Analogsignale auswertet und in Form von Schaltsignalen der Eisenbahnsignalanlage zur Verfügung stellt. Wegen des bekannten Standes der Technik braucht hier nicht näher auf die Funktionen solcher Baugruppen 34 eingegangen werden.

Das Abgleichgerät 35 kann prinzipiell an jeder Stelle auf dem Signalübertragungsweg zwischen Radsensor 6 und Bewertungsbaugruppe 34 angeschlossen werden. Praktischerweise werden die leicht zugänglichen und meist offenen Klemmstellen an der Kabelabschlußeinrichtung 31 bevorzugt. Eine weitere Möglichkeit besteht an den Klemmstellen des Gleisanschlußgehäuses 30. Die Anschlüsse des Abgleichgerätes 35 werden direkt mit den Sensoradern galvanisch verbunden sodaß sie in der Lage sind, zusätzlich zur Spannungsversorgung des Radsensors 6 Spannung und Strom einzubringen.

Fig. 4 und Fig. 5 zeigen Beispiele, wie der Abgleichvorgang zweckmäßig ablaufen kann. Auf der vertikalen Achse ist die Sensorversorgungsspannung U aufgetragen, die horizontale Achse t zeigt den zeitlichen Verlauf an. Der Ablauf, dargestellt in Fig. 4 gestaltet sich dermaßen, daß beginnend mit dem Spannungsverlauf links die betriebsübliche Versorgungsspannung Uv anliegt. Der Abgleichvorgang beginnt, indem das Abgleichgerät die Spannung Ua auf die Kabeladern aufschaltet. Im Radsensor startet der programmgemäße Abgleich, wie unter den Erläuterungen der Fig. 2 beschrieben. Der erfolgreiche Abgleich wird schließlich durch eine Belastung der Abgleichspannung Ua quittiert. Im Abgleichgerät 35 kann diese Quittierung wegen der Erhöhung des Strombedarfs erkannt und dem Bediener ersichtlich gemacht werden. Im Spannungsverlauf der Fig. 4 ist der Bereich der Quittierung Q als Spannungseinbruch dargestellt, der sich auf Grund eines gewissen Innenwiderstandes des Abgleichgerätes 35 ergeben kann.

Das Verfahren nach Fig.5 verwendet Frequenzinformationen für Abgleich und Quittierung, im Gegensatz zum Gleichstromverfahren nach Fig. 4. In einer weiteren Ausbildung des Verfahrens ist vorgesehen, den Informationsfluß durch serielle Datenworte, beispielsweise im PWM- Verfahren, zu bewerkstelligen. Wegen des bekannten Standes der Technik solcher Übertragungsverfahren muß hier nicht näher darauf eingegangen werden. Bei Anwendung solcher Techniken eröffnen sich weitere Vorteile für die Erfindung, beispielsweise die Übertragung verschiedener Abgleichbefehle oder Quittiermeldungen, die Aufschluß über den Abgleichverlauf, dessen Scheitern oder weitere Angaben über den Zustand des Radsensors 6 geben.

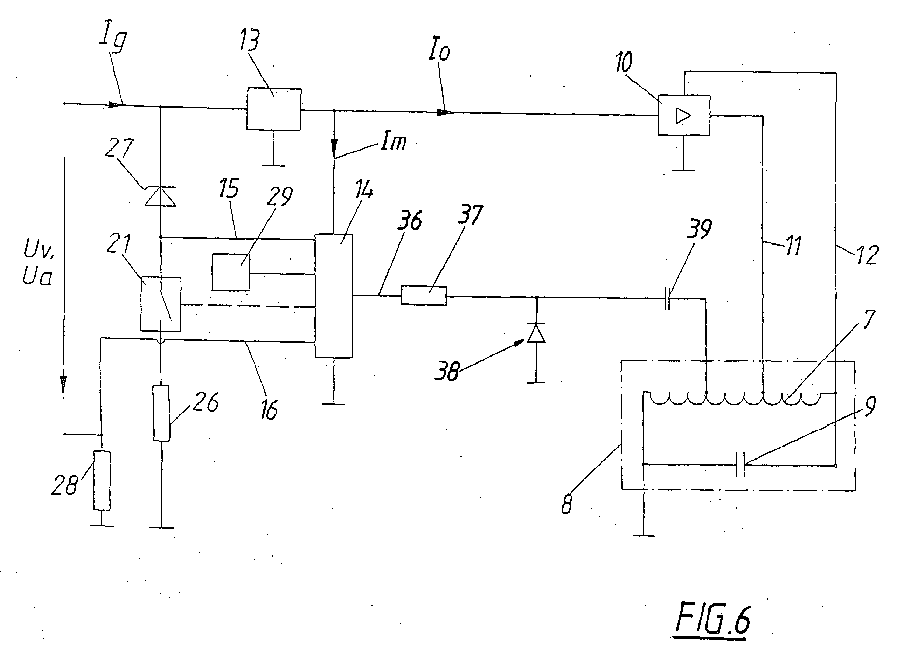

Beim Ausführungsbeispiel nach Fig. 6 besitzt der Mikrocontroller 14 einen Analogausgang 36, über den eine einstellbare Spannung als Abgleichspannung ausgegeben werden kann, deren Höhe einstellbar ist, wobei die Einstellungswerte gespeichert sind und überdies wie dies im Zusammenhang mit Fig. 2 beschrieben wurde, durch Signale eines Temperaturfühlers 29 beeinflußt werden können. An den Ausgang 36 ist zwischen einem Widerstand 37 bzw. einer entsprechenden Impedanz und einen dem Potentialausgleich dienenden Kondensator 39 eine Kapazitätsdiode 38 angeschaltet, deren Kapazität durch die anliegende Sperrspannung bestimmt wird. Die Gesamtschaltung liegt an der Sensorspule 7 an.

## Patentansprüche

1. Schaltungsanordnung zum Abgleichen von induktiven Sensoren, insbesondere von im Gleisbereich von Bahnen vorgesehenen Zweidraht-Radsensoren (6), die in der Befestigungslage an der Schiene (1) unterschiedlichen Beeinflussungen zum Beispiel auf Grund der Schienenform, der Montagestellung bzw. der momentanen Temperatur unterliegen, welche Schaltungsanordnung (Fig. 2) passive Abgleichelemente (22 bis 25) und eine wenigstens einen über einen Steuerbefehl aktivierbare Steuereinrichtung (14, 17 bis 20) aufweist, die die Abgleichelemente (22 bis 25) bis zum Erreichen eines Sollzustandes an- bzw. abschaltet, **dadurch gekennzeichnet, daß** die Steuereinrichtung (14, 17 bis 20) wenigstens einen über den Steuerbefehl aktivierbaren Mikrocontroller (14) und von diesem gesteuerte Schalter (17 bis 20) aufweist, welche die insbesondere aus Widerständen (22 bis 25) und/oder Kondensatoren bestehenden Abgleichelemente (22 bis 25) in vorwählbarer Reihenfolge direkt an die Oszillatorspule (7) des Sensors (6) an bzw. von dieser abschaltet, bis der zum Beispiel durch eine vorgegebene Höhe für den Soll-Ruhestrom des Sensors (6) definierte Abgleich erreicht ist, wobei, zum Beispiel im Mikrocontroller (14), ein nicht flüchtiger Speicher vorgesehen ist, der die Schalterstellungen im Abgleichzustand bei nach dem Abgleichen deaktiviertem Mikrocontroller (14) festhält.

2. Schaltungsanordnung nach Anspruch 1, **dadurch gekennzeichnet, daß** der Mikrocontroller (14) einen Eingang (16) für ein z. B. vom Ruhestrom des Sensors (6) abgeleitetes, dem momentanen Abgleichzustand entsprechendes Meßsignal aufweist und aus dem Vergleich dieses Meßsignales mit einem gespeicherten Referenzwert für den Sollzustand die neuen Abgleichbefehle entwickelt.

3. Schaltungsanordnung nach den Ansprüchen 1 und 2, **dadurch gekennzeichnet, daß** der Mikrocontroller (14) an die Leitungen des Radsensors (6) angeschlossen, durch ein über diese Leitung übertragenes, sich von der Versorgungsspannung (Uv) des Sensors (6) unterscheidendes Signal (Ua) aktivierbar ist und den erfolgten Abgleich durch ein Quittierungssignal (Q) anzeigt.

4. Schaltungsanordnung nach den Ansprüchen 1 bis 3, **dadurch gekennzeichnet, daß** zur Aktivierung ein der Versorgungsspannung (Uv) überlagerter Impuls höherer Spannung (Ua) vorgesehen ist (Fig. 4).

5. Schaltungsanordnung nach den Ansprüchen 1 bis 3, **dadurch gekennzeichnet, daß** zur Aktivierung ein eine definierte Frequenz aufweisender Impuls vorgesehen ist.

6. Schaltungsanordnung nach den Ansprüchen 1 bis 3, **dadurch gekennzeichnet, daß** als Aktivierungsbefehl ein vom Eingang des Mikrocontrollers (14) erfaßbares serielles Datenwort vorgesehen ist.

7. Schaltungsanordnung nach den Ansprüchen 1 und 2, **dadurch gekennzeichnet, daß** wenigstens ein mit einem Eingang des Mikrocontrollers (14) verbundener Temperatursensor (29) vorgesehen ist, so daß der Mikrocontroller (14) bei Änderungen der Temperatur gegenüber der Temperatur bei einem Erstabgleich die Schalterstellungen bzw. die die Schalterstellungen bewirkenden Speicherwerte nach einem gespeicherten Korrekturprogramm im Sinne einer Temperaturkompensation unter Aufrechterhaltung des Erstabgleichzustandes verändert.

8. Schaltungsanordnung nach den Ansprüchen 1 und 2, oder einem oder mehreren der Ansprüche 1 bis 6, **dadurch gekennzeichnet, daß** für die Frequenzabstimmung die gesteuerten Schalter (17-20) und von ihnen ein- und abschaltbare Kondensatoren durch wenigstens eine Kapazitätsdiode (38) ersetzt oder ergänzt sind, wobei der Mikrocontroller (14) die Höhe der Sperrspannung der Kapazitätsdiode (38) nach den Speicherwerten bestimmt.

## Claims

1. Circuit arrangement for adjusting inductive sensors, in particular two-wire wheel sensors (6) provided in the track region of railways, which are subject, in the fixed position on the track (1), to various influences, for example on account of the track form, the assembly position or the current temperature, which circuit arrangement (Fig. 2) comprises passive compensating elements (22 to 25) and a control device (14, 17 to 20) which can be activated at least by a control command which connects or disconnects the compensating elements (22 to 25) until a reference state is reached, **characterised in that** the control device (14, 17 to 20) comprises at least one microcontroller (14) which can be activated through the control command and switches (17 to 20) controlled by it which connect or disconnect the compensating elements (22 to 25) in particular consisting of resistors (22 to 25) and / or capacitors in a preselectable sequence directly to or from the oscillator coil (7) of the sensor (6) until the compensation defined for example by a predefined level for the reference no-load current of the sensor (6) is reached, whereby, for example in the microcontroller (14), a non-aligned memory is provided which keeps the switch positions in the compensated state once the microcontroller (14) has been deactivated after the compensation.

2. Circuit arrangement according to claim 1, **characterised in that** the microcontroller (14) comprises an input (16) for a measurement signal for example derived from the no-load current of the sensor (6) corresponding to the current compensation state and develops the new compensation commands from the comparison of this measurement signal with a stored reference value for the reference state.

3. Circuit arrangement according to claims 1 and 2, **characterised in that** the microcontroller (14) is connected to the lines of the wheel sensor (6), can be activated through a signal (Ua) transmitted via this line differing from the supply voltage (Uv) of the sensor (6) and indicates the compensation which has been carried out through an acknowledgement signal (Q).

4. Circuit arrangement according to claims 1 to 3, **characterised in that**, for the purpose of activation, an impulse of higher voltage (Ua) superimposed in relation to the supply voltage (Uv) is provided (Fig. 4).

5. Circuit arrangement according to claims 1 to 3, **characterised in that** an impulse having a defined frequency is provided for activation.

6. Circuit arrangement according to claims 1 to 3, **characterised in that** a serial data word which can be detected by the input of the microcontroller (14) is provided as an activation command.

7. Circuit arrangement according to claims 1 and 2, **characterised in that** at least one temperature sensor (29) connected to the input of the microcontroller (14) is provided, so that, upon changes in the temperature in relation to the temperature at the time of a first compensation, the microcontroller (14) changes the switch positions or the memory values causing the switch positions according to a stored correction program in the sense of temperature compensation, maintaining the first compensation state.

8. Circuit arrangement according to one or more of the claims 1 to 6, **characterised in that**, for the frequency orientation, the controlled switches (17 - 20) and capacitors which can be connected and disconnected by them are replaced or complemented by at least one capacitance diode (38), whereby the microcontroller (14) determines the level of the reverse voltage of the capacitance diode (38) according to the memory values.

## Revendications

1. Circuit pour ajuster des capteurs inductifs, en particulier des capteurs de roue à deux fils (6) prévus dans la zone de voies ferrées, qui, en position de fixation sur le rail (1) sont soumis à différentes influences, par exemple du fait de la forme du rail, de la position de montage ou de la température momentanée, ledit circuit (Fig. 2) présentant des éléments d'ajustement passifs (22 à 25) et au moins un dispositif de commande (14, 17 à 20) activable par un ordre de commande, dispositif de commande qui raccorde ou isole les éléments d'ajustement (22 à 25) jusqu'à l'atteinte d'un état de consigne, **caractérisé en ce que** le dispositif de commande (14, 17 à 20) présente au moins un microcontrôleur (14), activable par l'ordre de commande, et un interrupteur (17 à 20) commandé par celui-ci, qui raccorde directement à la bobine d'oscillateur (7) du capteur (6) ou isole de celle-ci, selon un ordre de succession pouvant être présélectionné, les éléments d'ajustement (22 à 25) composés, en particulier, de résistances (22 à 25) et/ou de condensateurs, jusqu'à ce que l'ajustage, défini par exemple par une hauteur prédéterminée du courant de repos de consigne du capteur (6), soit atteint, sachant que, par exemple, dans le microcontrôleur (14) est prévue une mémoire non volatile, qui contient les positions d'interrupteur à l'état d'ajustement pour un microcontrôleur (14) désactivé après l'ajustement.

2. Circuit selon la revendication 1, **caractérisé en ce que** le microcontrôleur (14) présente une entrée (16) pour un signal de mesure dérivé, par exemple, du courant de repos du capteur (6) et correspondant à l'état d'ajustement momentané et, à partir de la comparaison entre ce signal de mesure et une valeur de référence mémorisée pour l'état de consigne, développe les nouveaux ordres d'ajustement.

3. Circuit selon les revendications 1 et 2, **caractérisé en ce que** le microcontrôleur (14), raccordé aux lignes électriques du capteur de roue (6), est susceptible d'être activé par un signal (Ua) transmis par cette ligne, se distinguant de la tension d'alimentation (Uv) du capteur (6) et affiche l'ajustement effectué par un signal d'acquittement (Q).

4. Circuit selon les revendications 1 3, **caractérisé en ce qu'**une impulsion de plus haute tension (Ua), superposée à la tension d'alimentation (Uv), est prévue pour l'activation (Fig. 4).

5. Circuit selon les revendications 1 à 3, **caractérisé en ce qu'**une impulsion présentant une fréquence définie est prévue pour l'activation.

6. Circuit selon les revendications 1 à 3, **caractérisé en ce qu'**un mot de données sériel, susceptible d'être détecté par l'entrée du microcontrôleur (14), est prévu comme ordre d'activation.

7. Circuit selon les revendications 1 et 2, **caractérisé en ce qu'**au moins un capteur de température (29), relié à l'entrée du microcontrôleur, est prévu, de manière que le microcontrôleur (14), en cas de modifications de la température par rapport à la température lors d'un premier ajustement, modifie les positions d'interrupteur et/ou les valeurs de mémoire provoquant les positions d'interrupteur, selon un programme de correction mémorisé, dans le sens d'une compensation de la température, en conservant le premier état d'ajustement.

8. Circuit selon les revendications 1 et 2, ou l'une ou plusieurs des revendications 1 à 6, **caractérisé en ce que**, pour l'ajustement de fréquences, les interrupteurs (17 à 20) commandés et des condensateurs, susceptibles d'être connectés et isolés par eux, sont remplacés ou complétés par au moins une diode à capacité (38), sachant que le microcontrôleur (14) détermine la valeur de la tension de blocage de la diode à capacité (38), selon les valeurs en mémoire.
